# EUROPEAN PATENT SPECIFICATION

(11) **EP 4 056 862 B1**
(45) Date of publication and mention of the grant of the patent: **03.04.2024**
(21) Application number: 20931284.2
(22) Date of filing: 26.05.2020
(51) Int. Cl.: F16B 19/08, F16B 19/10, B21J 15/02, B21J 15/32

(54) **SINGLE-GROOVE BLIND FASTENER AND MOUNTING METHOD THEREFOR**
JALOUSIEBEFESTIGER MIT EINZELRILLE UND MONTAGEVERFAHREN DAFÜR
ÉLÉMENT DE FIXATION AVEUGLE À RAINURE UNIQUE ET SON PROCÉDÉ DE MONTAGE

(30) Priority: 14.04.2020 CN 202010291976
(43) Date of publication of application: 14.09.2022
(73) Proprietor: Meishan CRRC Fastening System Co., Ltd., Meishan, Sichuan 620032 (CN)
(72) Inventor: WANG, Shibo, Sichuan 620032 (CN); LIU, Yu, Sichuan 620032 (CN); DENG, Tao, Sichuan 620032 (CN); JIA, Yunlong, Sichuan 620032 (CN); ZHAO, Xiangyun, Sichuan 620032 (CN); LI, Chuanqi, Sichuan 620032 (CN); HE, Xu, Sichuan 620032 (CN); LI, Wei, Sichuan 620032 (CN); GUO, Long, Sichuan 620032 (CN)
(74) Representative: Ipside
(86) International application number: PCT/CN2020/092249
(87) International publication number: WO 2021/208187

(56) References cited:
- EP-B1- 1 141 560
- CN-A- 107 218 280
- CN-A- 109 764 046
- CN-U- 205 876 911
- CN-U- 212 055 430
- JP-A- 2018 134 656
- TW-A- 201 836 733
- US-A- 5 519 927
- US-A1- 2019 003 506

## Description

### Technical Field

The present invention belongs to the technical field of riveting, in particular to design and manufacture of a single-groove blind pop rivet riveting fastener for blind hole connection, and belongs to rivet (B21J) and fastener (F16B) in the metal machining.

### Background of the Invention

For mounting a pop rivet for two-sided riveting, the rivet is inserted into a mounting hole from a front side of a connected part, a collar is sleeved on an outer circumference of the rivet from a rear side, a collar head is placed in the front, and a cylinder of the collar is placed in the rear. A riveter arranged at the rear of two connected parts clamps a tail broached groove section of the rivet for pop riveting. After riveting, the collar cylinder is deformed and pressed radially on an outer circumference of a circular groove section of the rivet, and the collar head is pressed axially on the surface of the rear connected parts, thus the two connected parts are fastened. However, a premise of the two-sided riveting is that there is enough space on both sides of an object to be riveted. In practice, especially in assembly process, there is often enough space on one side of the object only, while the space on the other side is very small, and even bolts can not be put in, such as connection of fasteners for blind holes. Therefore, one-sided deformed connection pop rivets are often used.

Conventional one-sided deformed connecting pop rivets are used to completed assembly of rivet rods and collars before use. Then, it only needs to insert the mounting hole from one side of a connector, and then grip a tail of a one-sided connected part through a jaw in the riveter to drive the rivet to move outward, squeeze the collar, and a tube portion of the collar bulges and deforms to form an annular convex blind rivet head. Further, the cylinder extrudes the collar to produce plastic deformation, clamps the riveted part and breaks an outer rivet rod to complete riveting.

For blind riveting, due to the blind holes or structure that are not easy to enter, in addition to different performance requirements for the collar, higher requirements are also raised for structural performance of the rivet.

In the prior art, bolts, single-groove short tail ring groove rivets and breaking type blind ring groove rivets are generally used to fasten and connect clamped parts.

When the single-groove short tail ring groove rivet is used for fastening connection, pre-installation is required on both sides of the clamped part, which is not suitable for blind hole operation. Sometimes it is necessary to make process holes on the clamped part, which will damage the clamped part. When the breaking type blind ring groove rivets are used to fasten and connect the blind hole such as clamped parts, the rivets will undergo large plastic deformation in the process of breaking the rivets, which may damage the clamped parts, and even loosen the riveted joints that have been completely deformed.

From EP 1 141 560 B1 there is known a blind fastener having a pin and a sleeve.

### Summary of the Invention

The present invention discloses a single-groove blind fastener and a mounting method therefor according to shortcomings of the prior art. The object of the present invention is to provide a single-groove blind fastening connection system with better performance and without breaking.

The present invention is realized by the following technical solution:
A single-groove blind fastener, comprises a rivet and a collar, where the rivet consists of a rivet head, a polished rod, a locking groove, a tail broached groove and a tail tooth in sequence, and the collar consists of a sleeve and a cap head; and
a tail of the rivet is a single-groove short tail structure, a ratio of length of the tail broached groove to total length of the tail tooth is 0.1 to 2, an included angle A between a generatrix at a bottom of the tail broached groove and an axis of the rivet is -30° to 0°, two axial ends at the bottom of the tail broached groove are fillet transition structures, a ratio of length of a flat portion of the tail tooth to the total length of the tail tooth is 0.1 to 1, and a tail of the tail tooth is a fillet transition structure.

Further, the ratio of the length of the tail broached groove to the total length of the tail tooth is 0.5 to 1.5.

Further, the included angle A between the generatrix at the bottom of the tail broached groove and the axis of the rivet is -15° to 0°.

Further, an arc of the fillet transition structure at the axial ends at the bottom of the tail broached groove is: (1/125) ≤ (R1/D) ≤ (1/4), (1/125) ≤ (R2/D) ≤ (1/4), where D is minimum radial diameter of the tail broached groove, R1 is radius of the transition fillet between the tail broached groove and the locking groove, and R2 is radius of the transition fillet between the tail broached groove and the tail tooth.

Further, the length of the flat portion of the tail tooth is 0.2 to 0.8 of the total length of the tail tooth.

Further, an arc of a tail fillet transition structure of the tail tooth is: (1/125) ≤ (R3/D₁) ≤ (1/2), where D₁ is diameter of the tail tooth, and R3 is radius of the tail fillet of the tail tooth.

Comparison with the prior art:
The fastener structure researched and innovatively designed in the present invention improves the length relationship of the flat portion of the tail tooth, and transitions between a bevel and the fillet designed on the tail tooth increases contact area between the tail tooth and a jaw of a mounting tool, and improves stress direction. The tail tooth of the rivet of the fastener of the present invention can meet the needs of riveting load, prevent occurrence of stress concentration during mounting, generate stabler and more reliable grasping and connection, further protect the rivet and setting equipment, and prolong service life thereof.

When carrying out fastening connection on clamped parts such as blind holes, due to structural design of a rivet ring groove and the tail tooth, the setting equipment is stabler and more reliable when grasping the rivets, low riveting tension can be applied to meet riveting requirements, the setting equipment can be miniaturized and light-weighted, and obvious deformation of the clamped parts and the rivets can be effectively avoided during mounting, which protects the clamped parts and the rivets, prolongs the service life of the mounting tools while meeting the use requirements, makes riveting combination stabler, further protects original structural performance of the connected clamped parts, and produces no mounting noise. During the mounting process, injury to mounting personnel due to flyout of the tail of the rivet caused by breaking can be avoided during the mounting process, which reduces safety hazards. Further anti-corrosion treatment is unnecessary after mounting. During production, raw materials can be saved, and production cycle can be shortened.

### Brief description of the Drawings

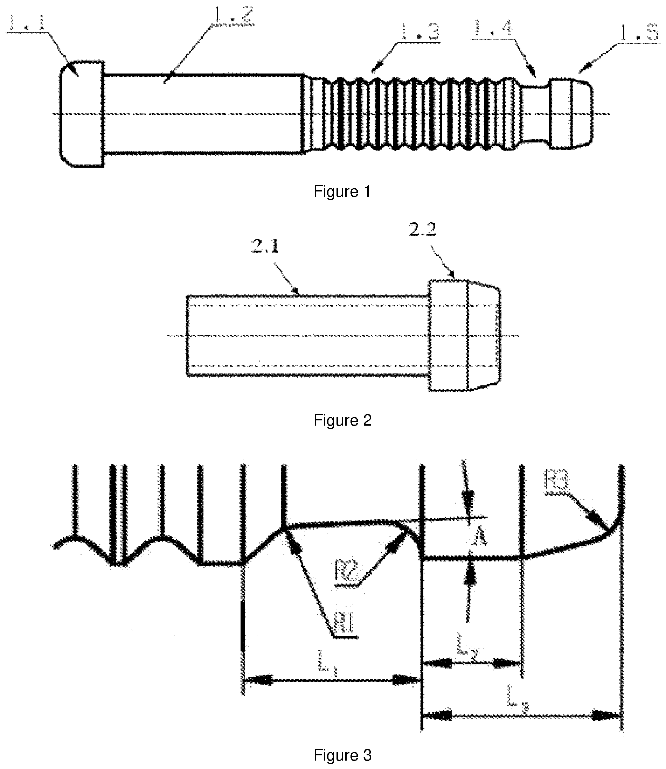

Figure 1 is a structural diagram of a rivet of a fastener of the present invention;
Figure 2 is a structural diagram of a collar of the fastener of the present invention;
Figure 3 is a partially enlarged structural diagram of the rivet of the present invention;
Figure 4 is a schematic diagram of a fastening connection preparation state of the present invention;
Figure 5 is a schematic diagram of a riveting preparation state of the fastener of the present invention and setting equipment;
Figure 6 is schematic diagram I of a fastening connection riveting process of the present invention;
and Figure 7 is schematic diagram II of the fastening connection riveting state of the present invention.

In the figures, 1.1 is a head, 1.2 is a polished rod, 1.3 is a locking groove, 1.4 is a tail broached groove, 1.5 is a tail tooth, 2.1 is a sleeve, 2.2 is a cap head, L₁ is length of the tail broached groove, L₂ is length of a flat portion of the tail tooth, L₃ is total length of the tail tooth, D is minimum radial diameter of the tail broached groove, D₁ is diameter of the tail tooth, R1 is radius of a transition fillet between the tail broached groove and the locking groove, R2 is radius of a transition fillet between the tail broached groove and the tail tooth, R3 is radius of a tail fillet of the tail tooth, and A is an included angle between a generatrix at a bottom of the tail broached groove and an axis of the rivet.

### Detailed Description of Embodiments

The present invention is further described below in combination with specific embodiments which further illustrate principles of the present invention and do not limit the present invention in any way.

Refer to the figures.

A single-groove blind fastener, comprises a rivet and a collar, the rivet consists of a rivet head 1.1, a polished rod 1.2, a locking groove 1.3, a tail broached groove 1.4 and a tail tooth 1.5 in sequence, and the collar consists of a sleeve 2.1 and a cap head 2.2; and
a tail of the rivet is a single-groove short tail structure, a ratio of length L₁ of the tail broached groove to total length L₃ of the tail tooth is 0.1 to 1.5, an included angle A between a generatrix at a bottom of the tail broached groove 1.4 and an axis of the rivet is -30° to 0°, two axial ends at the bottom of the tail broached groove 1.4 are fillet transition structures, a ratio of length L₂ of a flat portion of the tail tooth to the total length L₃ of the tail tooth is 0.1 to 1, and a tail of the tail tooth is a fillet transition structure.

The ratio of the length L₁ of the tail broached groove to the total length L₃ of the tail tooth is 0.5 to 1.

The included angle A between the generatrix at the bottom of the tail broached groove and the axis of the rivet is -15° to 0°. When the included angle A between the generatrix at the bottom of the tail broached groove and the axis of the rivet is within this range, diameter of a connecting end between the tail broached groove 1.4 and the tail tooth 1.5 is less than that of a connecting end between tail broached groove 1.4 and the locking groove 1.3.

The ratio of the length L₂ of the flat portion of the tail tooth to the total length L₃ of the tail tooth is 0.2 to 0.8.

An arc of the fillet transition structure at the axial ends at the bottom of the tail broached groove is: (1/125) ≤ (R1/D)≤(1/4), (1/125)≤(R2/D)≤(1/4), where D is minimum radial diameter of the tail broached groove, R1 is radius of the transition fillet between the tail broached groove and the locking groove, and R2 is radius of the transition fillet between the tail broached groove and the tail tooth.

An arc of a tail fillet transition structure of the tail tooth is: (1/125) ≤ (R3/D1) ≤ (1/2), where D₁ is diameter of the tail tooth, and R3 is radius of the tail fillet of the tail tooth.

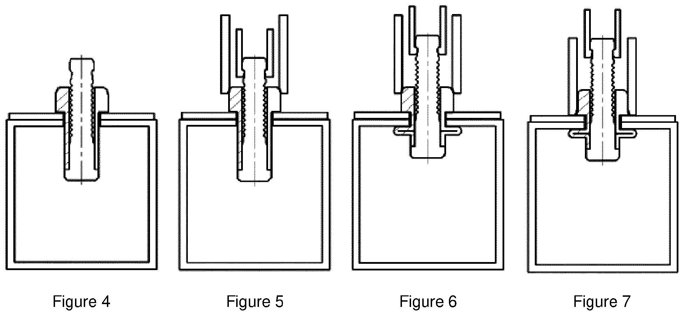

A riveting process of the fastener of the present invention is shown in Figures 4 to 7. The specific mounting process comprises the following steps:
(1) As shown in Figure 4, passing the rivet and the collar through a clamped part in the way shown in the figure to prepare for riveting;
(2) As shown in Figure 5, extending the tail tooth 1.5 of the rivet into the setting equipment with special setting equipment to engage the tail broached groove 1.4 and the tail tooth 1.5 with a jaw in the setting equipment;
(3) As shown in Figure 6, starting a switch of the setting equipment to drag the tail tooth 1.5 with the jaw in the setting equipment to move relative to an anvil, applying an axial force to the rivet, and allowing the anvil to slightly squeeze the collar cap head 2.2;
(4) As shown in Figure 7, under the action of the axial force, making the sleeve 2.1 of the collar to begin to deform on an outside of the clamped part, and making the anvil continue to squeeze the collar cap head 2.2, making the anvil begin to move in an opposite direction when the collar is completely deformed on both sides of the clamped part, and completing the riveting process after both are completely separated.

## Claims

1. A single-groove blind fastener, comprising a rivet and a collar, wherein the rivet consists of a rivet head (1.1), a polished rod (1.2), a locking groove (1.3), a tail broached groove (1.4) and a tail tooth (1.5) in sequence, and the collar consists of a sleeve (2.1) and a cap head (2.2); and a tail of the rivet is a single-groove short tail structure, a ratio of length of the tail broached groove (1.4) to total length of the tail tooth (1.5) is 0.1 to 2, an included angle A between a generatrix at a bottom of the tail broached groove (1.4) and an axis of the rivet is -30° to 0°, two axial ends at the bottom of the tail broached groove (1.4) are fillet transition structures, a ratio of length of a flat portion of the tail tooth (1.5) to the total length of the tail tooth (1.5) is 0.1 to 1, and a tail of the tail tooth (1.5) is a fillet transition structure.

2. The single-groove blind fastener according to claim 1, wherein the ratio of the length of the tail broached groove (1.4) to the total length of the tail tooth (1.5) is 0.5 to 1.5.

3. The single-groove blind fastener according to claim 2, wherein the included angle A between the generatrix at the bottom of the tail broached groove (1.4) and the axis of the rivet is -15° to 0°.

4. The single-groove blind fastener according to claim 2, wherein the length of the flat portion of the tail tooth (1.5) is 0.2 to 0.8 of the total length of the tail tooth (1.5).

5. The single-groove blind fastener according to claim 2, wherein an arc of the fillet transition structure at the axial ends at the bottom of the tail broached groove (1.4) is: (1/125) ≤ (R1/D) ≤ (1/4), (1/125) ≤ (R2/D) ≤ (1/4), where D is minimum radial diameter of a ring groove, R1 is radius of the transition fillet between the tail broached groove (1.4) and the locking groove (1.3), and R2 is radius of the transition fillet between the tail broached groove (1.4) and the tail tooth (1.5).

6. The single-groove blind fastener according to claim 2, wherein an arc of a tail fillet transition structure of the tail tooth (1.5) is: (1/125) ≤ (R3/D1) ≤ (1/2), where D₁ is diameter of the tail tooth (1.5), and R3 is radius of the tail fillet of the tail tooth (1.5).

7. A mounting method for a single-groove blind fastener, wherein the fastener is the single-groove blind fastener according to any of claims 1 to 6, and the method comprises the following steps:
(1) passing the rivet and the collar through a clamped part in the way shown in the figure to prepare for riveting;
(2) extending the tail tooth (1.5) of the rivet into setting equipment with the setting equipment to engage the tail broached groove (1.4) and the tail tooth (1.5) with a jaw in the setting equipment;
(3) starting a switch of the setting equipment to drag the tail tooth (1.5) with the jaw in the setting equipment to move relative to an anvil, applying an axial force to the rivet, and allowing the anvil to slightly squeeze the collar cap head (1.1);
(4) under the action of the axial force, making the sleeve (2.1) of the collar to begin to deform on an outside of the clamped part, and making the anvil continue to squeeze the collar cap head (1.1), making the anvil begin to move in an opposite direction when the collar is completely deformed on both sides of the clamped part, and completing the riveting process after both are completely separated.

## Patentansprüche

1. Blindbefestigungselement mit Einzelnut, das einen Niet und einen Bund umfasst, wobei der Niet der Reihe nach aus einem Nietkopf (1.1), einem polierten Stab (1.2), einer Verriegelungsnut (1.3), einer hinteren geräumten Nut (1.4) und einem hinteren Zahn (1. 5) besteht und der Bund aus einer Hülse (2.1) und einem Kappenkopf (2.2) besteht; und ein hinteres Ende des Niets eine kurze hintere Struktur mit Einzelnut ist, ein Verhältnis der Länge der hinteren geräumten Nut (1.4) zur Gesamtlänge des hinteren Zahns (1.5) 0,1 bis 2 beträgt, ein Einschlusswinkel A zwischen einer Erzeugenden an einem Boden der hinteren geräumten Nut (1.4) und einer Achse des Niets -30° bis 0° beträgt, zwei axiale Enden am Boden der hinteren geräumten Nut (1.4) Rundungsübergangsstrukturen sind, ein Verhältnis der Länge eines flachen Abschnitts des hinteren Zahns (1.5) zur Gesamtlänge des hinteren Zahns (1.5) 0,1 bis 1 beträgt und ein hinteres Ende des hinteren Zahns (1.5) eine Rundungsübergangsstruktur ist.

2. Einzelnut-Blindbefestigungselement nach Anspruch 1, wobei das Verhältnis der Länge der hinteren geräumten Nut (1.4) zur Gesamtlänge des hinteren Zahns (1.5) 0,5 bis 1,5 beträgt.

3. Einzelnut-Blindbefestigungselement nach Anspruch 2, wobei der Einschlusswinkel A zwischen der Erzeugenden am Boden der hinteren geräumten Nut (1.4) und der Achse des Niets -15° bis 0° beträgt.

4. Einzelnut-Blindbefestigungselement nach Anspruch 2, wobei die Länge des flachen Abschnitts des hinteren Zahns (1.5) 0,2 bis 0,8 der Gesamtlänge des hinteren Zahns (1.5) beträgt.

5. Einzelnut-Blindbefestigungselement nach Anspruch 2, wobei ein Bogen der Rundungsübergangsstruktur an den axialen Enden am Boden der hinteren geräumten Nut (1.4) beträgt: (1/125) ≤ (R1/D) ≤ (1/4), (1/125) ≤ (R2/D) ≤ (1/4), wobei D der minimale radiale Durchmesser einer Ringnut ist, R1 der Radius der Übergangsrundung zwischen der hinteren geräumten Nut (1.4) und der Verriegelungsnut (1.3) ist, und R2 der Radius der Übergangsrundung zwischen der hinteren geräumten Nut (1.4) und dem hinteren Zahn (1.5) ist.

6. Einzelnut-Blindbefestigungselement nach Anspruch 2, wobei ein Bogen einer hinteren Rundungsübergangsstruktur des hinteren Zahns (1.5) beträgt: (1/125) ≤ (R3/D1) ≤ (1/2), wobei D₁ der Durchmesser des hinteren Zahns (1.5) ist und R3 der Radius der hinteren Rundung des hinteren Zahns (1.5) ist.

7. Montageverfahren für ein Einzelnut-Blindbefestigungselement, wobei das Befestigungselement das Einzelnut-Blindbefestigungselement nach einem der Ansprüche 1 bis 6 ist und das Verfahren die folgenden Schritte umfasst:
(1) Führen des Niets und des Bunds durch ein eingespanntes Teil wie in der Abbildung gezeigt, um für das Nieten vorzubereiten;
(2) Strecken des hinteren Zahns (1.5) des Niets in eine Setzeinrichtung mit der Setzeinrichtung, um die hintere geräumte Nut (1.4) und den hinteren Zahn (1.5) mit einer Backe in der Setzeinrichtung in Eingriff zu nehmen;
(3) Einschalten eines Schalters der Setzeinrichtung, um den hinteren Zahn (1.5) mit der Backe in der Setzeinrichtung so zu ziehen, dass er sich relativ zu einem Amboss bewegt, Anlegen einer axialen Kraft an den Niet, und Zulassen, dass der Amboss den Bundkappenkopf (1.1) leicht quetscht;
(4) Bringen der Hülse (2.1) des Bunds dazu, unter der Wirkung der axialen Kraft zu beginnen, sich an einer Außenseite des eingespannten Teils zu verformen, und Bringen des Amboss dazu, den Bundkappenkopf (1.1) weiter zu quetschen, Bringen des Amboss dazu, zu beginnen, sich in eine entgegengesetzte Richtung zu bewegen, wenn der Bund auf beiden Seiten des eingespannten Teils vollständig verformt ist, und Abschließen des Nietprozesses, nachdem beide vollständig getrennt sind.

## Revendications

1. Élément de fixation aveugle à rainure unique, comprenant un rivet et un collier, dans lequel le rivet est composé d'une tête de rivet (1.1), d'une tige polie (1.2), d'une rainure de verrouillage (1.3), d'une rainure brochée de queue (1.4) et d'une dent de queue (1.5) dans cet ordre, et le collier est composé d'un manchon (2.1) et d'une tête de capuchon (2.2) ; et une queue du rivet est une structure à queue courte à rainure unique, un rapport de la longueur de la rainure brochée de queue (1.4) à la longueur totale de la dent de queue (1.5) est de 0,1 à 2, un angle inclus A entre une génératrice au niveau d'un fond de la rainure brochée de queue (1.4) et un axe du rivet est de -30° à 0°, deux extrémités axiales au niveau du fond de la rainure brochée de queue (1.4) sont des structures de transition à congé, un rapport de la longueur d'une partie plate de la dent de queue (1.5) à la longueur totale de la dent de queue (1.5) est de 0,1 à 1, et une queue de la dent de queue (1.5) est une structure de transition à congé.

2. Élément de fixation aveugle à rainure unique selon la revendication 1, dans lequel le rapport de la longueur de la rainure brochée de queue (1.4) à la longueur totale de la dent de queue (1.5) est de 0,5 à 1,5.

3. Élément de fixation aveugle à rainure unique selon la revendication 2, dans lequel l'angle inclus A entre la génératrice au niveau du fond de la rainure brochée de queue (1.4) et l'axe du rivet est de -15° à 0°.

4. Élément de fixation aveugle à rainure unique selon la revendication 2, dans lequel la longueur de la partie plate de la dent de queue (1.5) est de 0,2 à 0,8 de la longueur totale de la dent de queue (1.5).

5. Élément de fixation aveugle à rainure unique selon la revendication 2, dans lequel un arc de la structure de transition à congé au niveau des extrémités axiales au niveau du fond de la rainure brochée de queue (1.4) est : (1/125) ≤ (R1/D) ≤ (1/4), (1/125) ≤ (R2/D) ≤ (1/4), où D est le diamètre radial minimal d'une rainure annulaire, R1 est le rayon du congé de transition entre la rainure brochée de queue (1.4) et la rainure de verrouillage (1.3), et R2 est le rayon du congé de transition entre la rainure brochée de queue (1.4) et la dent de queue (1.5).

6. Élément de fixation aveugle à rainure unique selon la revendication 2, dans lequel un arc d'une structure de transition à congé de queue de la dent de queue (1.5) est : (1/125) ≤ (R3/D1) ≤ (1/2), où D₁ est le diamètre de la dent de queue (1.5), et R3 est le rayon du congé de queue de la dent de queue (1.5).

7. Procédé de montage pour un élément de fixation aveugle à rainure unique, dans lequel l'élément de fixation est l'élément de fixation aveugle à rainure unique selon l'une quelconque des revendications 1 à 6, et le procédé comprend les étapes suivantes :
(1) le passage du rivet et du collier à travers une partie serrée de la manière représentée dans la figure pour préparer le rivetage ;
(2) l'extension de la dent de queue (1.5) du rivet dans un équipement de montage avec l'équipement de montage pour mettre en prise la rainure brochée de queue (1.4) et la dent de queue (1.5) avec une mâchoire dans l'équipement de montage ;
(3) le démarrage d'une commutation de l'équipement de montage pour traîner la dent de queue (1.5) avec la mâchoire dans l'équipement de montage pour son déplacement par rapport à une enclume, l'application d'une force axiale sur le rivet, et l'autorisation pour l'enclume de presser légèrement la tête de capuchon de collier (1.1) ;
(4) sous l'action de la force axiale, le début de déformation du manchon (2.1) du collier sur un extérieur de la partie serrée, et la poursuite de la pression de l'enclume sur la tête de capuchon de collier (1.1), le début de déplacement de l'enclume dans une direction opposée lorsque le collier est complètement déformé des deux côtés de la partie serrée, et l'achèvement du processus de rivetage une fois que tous les deux sont complètement séparés.
